# EUROPEAN PATENT SPECIFICATION

(11) **EP 2 035 209 B1**
(45) Date of publication and mention of the grant of the patent: **04.05.2016**
(21) Application number: 07719204.5
(22) Date of filing: 04.05.2007
(51) Int. Cl.: B29C 49/06, B65D 1/02, C08L 67/02, B29C 49/22, B29C 47/06

(54) **PREFORM AND CONTAINER FOR RADIOSENSITIVE PRODUCTS AND METHOD FOR THE MANUFACTURING THEREOF**
VORFORMLING UND BEHÄLTER FÜR STRAHLENEMPFINDLICHE PRODUKTE UND HERSTELLUNGSVERFAHREN DAFÜR
PRÉFORME ET CONTENANT DESTINÉS À DES PRODUITS RADIOSENSIBLES ET PROCÉDÉ DE FABRICATION

(30) Priority: 04.05.2006 BE 200600262; 18.05.2006 BE 200600283
(43) Date of publication of application: 18.03.2009
(73) Proprietor: Resilux, 9230 Wetteren (BE)
(72) Inventor: DIERICK, William, 9070 Heusden (BE)
(74) Representative: Petsis, Christos
(86) International application number: PCT/BE2007/000040
(87) International publication number: WO 2007/128085

(56) References cited:
- EP-A- 0 273 681
- EP-A- 0 553 845
- EP-A- 0 644 035
- EP-A- 1 157 806
- EP-A1- 0 055 595
- EP-A2- 0 273 897
- JP-A- 54 029 379
- US-A1- 2003 039 779
- US-A1- 2005 170 113
- US-A1- 2005 252 879
- US-A1- 2006 029 822
- DATABASE WPI Week 200430, Derwent Publications Ltd., London, GB; AN 2004-320520 -& JP 2004 058565 A (TAHARA KK) 26 February 2004

## Description

### Field of the invention

The present invention relates to containers for containing products that are sensitive to radiation, especially light, essentially of the food industry, more particularly milk and further dairy products, including nutrients and dairy products that are enriched or contain fruit.

The present invention also relates to a preform, serving as a semi-finished product, for making such containers, consisting of at least one base layer made of a primary plastic material, with a certain amount of additives incorporated in it.

### Background of the invention

Plastic containers including bottles made of polyesters and notably polyethylene terephthalate (PET) are increasingly employed for packaging food and drinks. PET containers were originally used for carbonated beverages, such as soda water. They have since gained considerable ground in all areas of the food sector, such as drinks, including milk.

Polyethylene terephthalate is an excellent material for packaging pasteurized milk, which does not keep for long and is distributed and kept cold, with a shelf life of 7-10 days. However, the absence of a built-in light barrier extending across the whole container greatly hampers the use of all-PET plastic formulations for packaging sterilized, long-life ultra-high temperature (UHT) milk, which keeps for 4-6 months at a normal temperature.

One of the problems with milk and dairy products generally lies in their unstable nature. The fact is that they can be attacked by undesirable external effects forming part of the prevailing conditions of the surroundings. Their keeping properties therefore depend to a great extent on the way they are packed.

Owing to the absence of protection from light in the existing packaging units, the milk in them undergoes photo-oxidation. This causes undesirable off-flavours associated with the action of light. Riboflavin (vitamin B₂) is also readily attacked, and so are some of the other vitamins and nutrients, which similarly undergo photo-degradation in the presence of light.

It is well known that milk is degraded by exposure to visible but also invisible light, mainly in the wavelength range between 200 and 550 nm. It must therefore be protected at all cost from harmful light of such wavelengths in order to ensure that the quality of milk is retained for the entire shelf life scheduled for it.

In the case of products containing additional nutrients that are sensitive to oxygen, the penetration of the latter must also be reduced as much as possible in order to stop the deterioration of the quality. Packs have therefore been developed for UHT milk to prevent the penetration both of visible light and of UV radiation. Multilayer carton packs with a full light barrier have thus been introduced, as well as aluminium foil to prevent the penetration of oxygen. However, the keeping qualities of the contents of these packs after opening leave something to be desired, owing to the closure of these packaging units.

### Prior art

The Japanese document JP 55 117632 A of MITSUBISHI RAYON describes a plastic container with a transparent neck and an opaque body, so that not all its parts have the same opacity, and the light barrier is not present over the whole container, i.e. it does not extend over the neck section. Furthermore, these containers are only intended for cosmetics.

Document EP 0 273 681 A2 of MOBIL OIL CORP describes a process for making polymer films that become glossy when incorporating high percentages of additives up to 30%, to ensure the required opacity in the end product, but they do not have a definite three-dimensional shape and actually do not even have a shape of their own at all. In addition, the additive concentration in them is quite high. It is also stressed here that the additive must have a higher glass transition temperature T_{g} and a higher melting temperature Tₘ than the base polymer used as the primary material, which is a set precondition for being able to keep the mixture in the molten state. This is of course a significant limitation, since the material must inevitably be melted during its processing. Besides, this document does not give any information about the specificity connected with the well-defined three-dimensional shape of the object envisaged here.

Document US 4 410 482 A of SUBRAMANIAN PALLATHERI yet describes extruded and blown bottles made from mixtures of polymers, but again high percentages, up to 40% of additives are used in them, i.e. even more than in the case depicted above.

Document EP 0 974 438 A1 of TEIJIN Ltd yet describes polymer mixtures, but they are intended for transparent containers, whose light-barrier properties appear to be unsatisfactory, or at least call for considerable improvement.

Document US2006/029822 A1 of BROWN yet discloses a bottle preform useful for packaging liquid such as milk, other dairy products, and the like, having a structure such as (pigmented PET)/ idem EVOH + TiO2 + liquid colorants) / Pigmented PET.

The Yoshino document EP0055595 refers to the use of coloured and opaque bottles that are produced by adding colour pigments, for protecting light sensitive products.

Document US2005/252879 refers to the use of opaque preforms which have a transparent vertical stripe in. Just like with the latter Japanese document, the preforms are made coloured/opaque coloured by using coloured resin material. Just like in the other document above, this document does not disclose how to produce opaque preforms by mixing PET with another clear polymer at low addition levels.

As to document US2005/170113 of P&G, it discloses how to produce a preform with an unfilled area that is filled by injecting in another mould. Different colours can be put into the preform and bottle, provided they are injected from 2 extruders. This document also teaches how to achieve coloured preforms by mixing in colour pigments as per above.

As to the Monsanto document EP0273897 A2, it notes that the containers are opaque, which is due to the fact that the PET has been crystallised in the blowing process. Highly crystallised PET (quoted at 55%) is well known in the literature to be opaque (ovenable CPET trays). This document also teaches that the preforms are hazy and not opaque due to the mix of the SMA/PET polymers, compared to the white bottles produced from these preforms. This is entirely different to what is claimed in the subject application which consists in opaque preforms being blown into opaque bottles, with no colours pigments and at very low addition percentages. The latter patent application is also directed on an increase in the stiffness for Aerosol type applications, high stiffness for Aerosol type applications, high stiffness high temp resistance, contrarily to the subject application.

This document thus describes aerosol-type pressurized containers made from non-opaque preforms that consist of mixtures of PET and additives of the type of styrenemaleic anhydride (SMA) copolymer, yet with a still high concentration of the latter up to 30%. The purpose of this additive is mainly to make the resulting PET containers more rigid, so that they are able to fairly resist the high pressures used in aerosol-type containers envisaged here. However, this document does not contribute to solve the present problem about the improvement of the walls of the packs for excluding the incident light, which in case of ordinary containers are characterised by a proper shape under normal atmospheric pressure of about 1 atm. Nor does this document describe an opaque preform.

As to the Monsanto document EP0273897 A2, it notes that the containers are opaque, which is due to the fact that the PET has been crystallised in the blowing process. Highly crystallised PET (quoted at 55%) is well known in the literature to be opaque (ovenable CPET trays). This document also teaches that the preforms are hazy and not opaque due to the mix of the SMA/PET polymers, compared to the white bottles produced from these preforms. This is entirely different to what is claimed in the subject application which consists in opaque preforms being blown into opaque bottles, with no colours pigments and at very low addition percentages. The latter patent application is also directed on an increase in the stiffness for Aerosol type applications, high stiffness for Aerosol type applications, high stiffness high temp resistance, contrarily to the subject application.

This document thus describes aerosol-type pressurized containers made from non-opaque preforms that consist of mixtures of PET and additives of the type of styrenemaleic anhydride (SMA) copolymer, yet with a still high concentration of the latter up to 30%. The purpose of this additive is mainly to make the resulting PET containers more rigid, so that they are able to fairly resist the high pressures used in aerosol-type containers envisaged here. However, this document does not contribute to solve the present problem about the improvement of the walls of the packs for excluding the incident light, which in case of ordinary containers are characterised by a proper shape under normal atmospheric pressure of about 1 atm. Nor does this document describe an opaque preform.

Actually, this document EP-A2-0 273 897 teaches an increased strength, which is generated by means of plastic additives having a quite different nature and function and also in quite different amounts in comparison with the subject application.

In addition, document EP-A-0 553 845 discloses a method to fabricate plastic articles, with a primary resin, and a secondary resin incompatible with the primary one, in order to achieve luster and impact resistance. It further teaches that in some circumstances the plastic can get completely opaque, but then the result is a luster which is poor gradeness. This proves that plastic additives are not incorporated to generate the opacity.

And finally, document US 2003/039779 A1 discloses a multilayer container, one layer consisting of a blend of PET and polyamide, in order to get layer to layer lamination strength, and a gas barrier. The document does not disclose any method to get opacity. JP 2004058565 discloses a preform in accordance with the preamble of claim 1.

### Aim of the invention

The aim of the present invention is to solve the problem consisting of the improved processing properties which allow the avoidance of coloring additives, by including additives that are more suitable as regards their nature.

### Summary of the invention

There is thus proposed in the present invention a preform as defined in claim 1, claim 6 and claim 12. Thanks to the preform proposed according to the invention, an opaque container such as a bottle can be directly obtained that reliably protects its contents from external radiation, especially electromagnetic radiation and more specifically light, whether natural or artificial and whether visible or ultraviolet. It will be understood that ordinary containers are meant that have stiff or semi-rigid walls of a predetermined shape and which do not have to meet special requirements such as those needed for high pressure. The containers proposed according to the invention are yet intended for use at normal pressure. Opaque preforms are thus proposed which serve as semi-finished intermediate products that can be easily and directly converted into containers that have efficient light barrier properties. In particular, the refractive index of the primary base material is modified here to such an extent that the incident radiation suffers virtually no refraction. As a result, the drink or food kept in the container is protected from harmful external light under normal operating conditions as regards pressure, especially against photo-oxidation and from the subsequent degradation of products occurring under the influence of photo-catalysis.

In a preferred embodiment of the present invention, the plastic is PET. This choice of material has several advantages indeed in the applications that are relevant to the invention, including a great flexibility of designing and shaping the container and a more reliable formation of the neck region of it, which makes it possible to drink straight out of the bottle without any problems.

The additives used are polymeric substances. As a result, the containers can be made with a nacreous effect, which ensures that a large part of the incident light is automatically reflected by its surface. In addition, the walls of the container have a large measure of internal refraction. These two phenomena -reflection and refraction- jointly ensure a considerable barrier to the penetration of light, which is desirable in the case of light-sensitive products such as UHT milk. The latter can therefore be kept reliably over long periods even under normal conditions, i.e. at room temperature and in the presence of light, without needing special storage conditions, such as a dark or cool place. A significant improvement is thus achieved over the existing PET structures, because the former are particularly suitable for keeping the products at a normal temperature, which is especially advantageous in the case of containers used for packaging UHT milk, which are kept at room temperature.

Another advantage is that the well known white pigment, which is more expensive, can be replaced by a low percentage of cheaper polymeric additives, which reduces the cost.

The additives are thermoplastic polymers. An excellent opacity may be achieved in the outside wall of the preform in this way, and the base material, generally PET, has a higher T_{g} and Tₘ value than the additive admixed to it. Thanks to the invention, it is thus obtained that coloring additives are disregarded by replacing these by incompatible polymers, resp. fragmented particles.

In particular, the additives are polyolefins. The advantage thereof is that this material is incompatible with the primary base material PET, their refractive indices being very different from that of PET. When two polymers with different refractive indices are mixed together, they produce a white mixture.

More particularly, said additive is polypropylene (PP). Indeed, this material is easy to disperse, especially in PET, which makes it useful when converting the preform into the container.

The present invention makes it possible to obtain a satisfactory opacity in the outer wall by admixing the above thermoplastic polymeric additives to PET in a ratio of 1 : 10 in terms of percent by weight.

The remarkable thing is that the change to white occurs already with a very little additive of up to only 2%, which is far less than the amounts used in the prior art. On the other hand, when the polymeric additives are present in a fairly high percentage, problems arise with the structure in the form of possible delamination due to incompatibility between the components of the mixture, so that it is preferable to use percentages that do not exceed the critical limit of 10% or even 8%, whereby satisfactory mechanical properties of the mixture are maintained, and a satisfactory barrier effect is ensured at the same time.

In a special embodiment of the invention, these additives are introduced into polyethylene terephthalate in an amount of 3-9%, and especially 5-8 wt-percent, which further reinforces the effect mentioned above. A particularly notable advantage here is that it is possible to achieve opaque PET containers whose walls are white and opaque, i.e. have a high colour density without the addition of a white pigment, the colour density being a measure of opacity.

Another notable special advantage obtained according to the invention by adding polypropylene is that it considerably improves the intrinsic viscosity (IV) of the processed preform material in comparison with that of conventional, mineral-filled PET. The intrinsic viscosity is a measure of the ease with which the preform can be processed in a stretching and blowing device that converts it into the final container. Opaque preforms with quite a large amount of pigment have significantly lower intrinsic viscosity than ordinary preforms, so they lack the required strength in the melt form during the blowing process. This makes it more difficult to stretch and blow the preform into a bottle with the required properties, especially the required wall thickness distribution.

By contrast, the preforms with added polypropylene instead of added pigments have a high intrinsic viscosity and a high strength in the molten state, so they are much easier to process in conventional stretching and blow-moulding machines. The direct result of this is that containers with a much lower weight can be manufactured with polymeric additives than with large amounts of pigments according to the standard prior art. Since the density of polypropylene is 30% lower than that of PET, the PET-PP mixture is lighter, and the weight of the container is less as well. So both the preforms and the containers obtained in this way are much lighter than the conventional ones.

A PET structure has recently been introduced that consists of a single layer of an opaque white PET layer but with a fairly large amount of pigment, namely titanium dioxide or zinc sulphate. The disadvantage of this structure is that a relatively large pigment charge of up to 8% is necessary, which is a drawback in injection moulding. Another undesirable effect occurs in the heating of preforms and their blowing into containers. Furthermore, the protection from light achieved here is unsatisfactory. Finally there is an adverse effect on the cost.

Some other known polyethylene packaging units have a three-layer structure with a light-barrier insert provided by a black polyethylene layer in between two white polyethylene layers, one on either side of it. A six-layer structure is also known, which is formed by placing the following layers one over the other: a white polyethylene layer, a black polyethylene layer, an adhesive, an ethylene - vinyl alcohol (EVOH) copolymer layer, another adhesive layer, and finally again a black polyethylene layer, the aim being to provide a barrier to both light and oxygen. A three-layer PET structure consisting of a black PET layer between two white PET layers is also known. In an interesting embodiment of the invention, the polymeric additive is incorporated in such a multi-layer structure having a black PET middle layer. Thanks to this measure, virtually all transmitted light can be excluded. So the combination of this polymer addition technique with a central black PET layer in a multi-layer structure has a certain effectiveness.

However, the disadvantage of especially the first two structures and to some extent of the last of the above structures is that the amount of white pigment incorporated in the outside layer must be quite large in order to prevent the black colour of the middle layer shining through. The fact is that this would cause a colour shift of the bottle surface to grey, which would leave a visible trace at the outer wall which is visible to the consumer. This smudging is most undesirable. To avoid this, the containers must be made with a white outside wall that is thick enough to screen the inner black layer completely in order to make it virtually invisible. However, this makes the bottles relatively heavy and expensive, as well as difficult to blow, since the white pigment must be used in quite a large amount.

According to an advantageous embodiment of the present invention, a preform with a multi-layer structure is thus proposed with a white PET intermediate layer.

In another embodiment of the invention, the preform contains a certain amount of fragmented metal in the above mixture, especially in powder form and preferably in the form of very small particles having a high dispersibility, so that the metal powder can be homogeneously distributed, the quantity used being especially about 2% and preferably not exceeding 1%. A useful advantage of this is that the resulting containers are considerably more recognizable, due to the presence of metal in them. This makes it easier to sort the containers when they are being recycled. In addition, the containers can also be coded in this way.

It is also possible here to achieve a particularly remarkable mirror effect on the inside of the wall of the container. This increases the number of possible applications of the containers with a light-barrier effect to include tubes for toothpaste and other cosmetics and for flowing foods such as mayonnaise and ketchup, the containers then having a semi-rigid wall, in addition to the containers with a rigid wall mentioned above.

According to a further remarkable embodiment of the invention, the surface of the PET containers can be transformed by changing the nacreous appearance to a metallized one, especially a silvery metallic appearance, by suitably incorporating additives during the blowing of the preforms into containers. The metallized appearance of the surface can be attributed to additional incompatibility between the two polymers, which in turn is due to the stretching of the material in the cold, which makes the nacreous surface additionally turn white, which nacreous effect then makes disappear it or reduces it, creating a mirror-like metallic appearance on the processed product.

The present invention is also related to a process for making opaque containers, including multi-layer polyester containers, by injection-moulding opaque preforms and by co-injection, followed by blowing the preforms to containers.

This involves the preparation of an immiscible composition that is naturally white, i.e. white without any pigments. The immiscibility is manifested in the orientation of the preform when it is being blown into a container, since the surface of the material is changed from having a white appearance to having a nacreous one, at least in the regions where the preform is stretched.

The light transmittance data can be further improved by adding a small amount of colourants to the PET/PP mixture, typically about 2-4 wt-% or about 5-8 wt-%, according to whether the container has a multi-layer or a single-layer structure, respectively. This yields results which are directly visible to the naked eye.

According to an additional remarkable embodiment of the invention, both the nacreous and the metallized finishes can be coloured by changing the white base either by adding coloured PP pigments to it, or by using a coloured intermediate layer in the case of a multi-layer structure.

Further features and properties of the preform, the container and the process will emerge from the following description of some embodiments of the invention, which are illustrated with the aid of the attached drawings.

### Brief description of the drawings

Fig. 1 shows a diagrammatic cross-section of a preform, taken along is longitudinal axis according to a first embodiment of the invention.
Fig. 2 shows a diagrammatic cross-section of a preform, also taken along its longitudinal axis according to a second embodiment of the invention.
Fig. 3 represents a front elevation of a first embodiment of a container according to the invention.
Fig. 4 is a front elevation of a further embodiment of a container according to the invention.
Fig. 5 to 9 show a first set of graphs based on measurements of the light-barrier properties and some related parameters.
Figs. 10 to 21 show a second set of graphs based on measurements of the light barrier properties and some related parameters in the case of single layer preforms represented in Fig. 2.
Figs. 22 to 24 show a third set of graphs based on measurements of the light barrier properties and some related parameters in the case of multilayer preforms represented in Fig. 1.

### Description

This invention here is generally involved with preforms and containers which are opaque and intended for containing products that are sensitive to radiation and especially light, such as milk, dairy products, fruit juices and so-called functional drinks with nutrients, which can thus be effectively protected from photo-oxidation and from the degradation of the contents based on photo-oxidation.

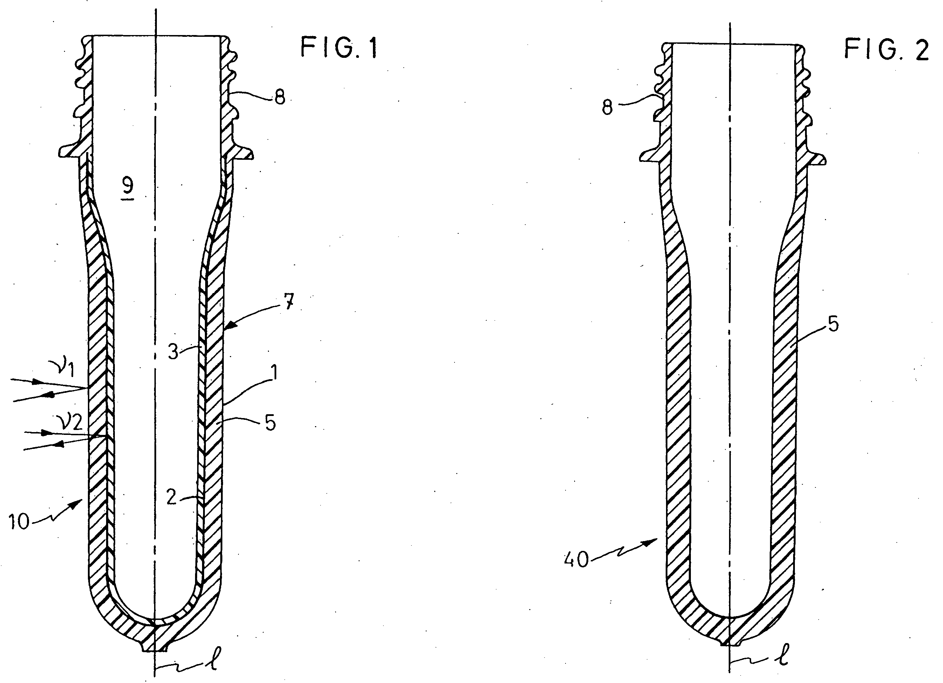

Fig. 1 shows a preform 10 with a wall 7 and a neck 8 in cross-section taken along the longitudinal axis **ℓ**. This is a three-layer structure consisting of a base material which is composed of a primary plastic, which forms an outer layer 1 and an inner layer 3, with an intermediate layer 2 between them, consisting of a secondary plastic. The primary plastic is advantageously polyethylene terephthalate, and the secondary plastic may also be polyethylene terephthalate. The primary base layer has a whitish and opaque appearance, so it reflects a large part of the incident radiation, especially light when it impinges on the wall as shown by the arrow ν₁. The outer layer 1 is made opaque by adding a thermoplastic polymeric additive 5 to PET in an amount of even only from 1 wt-% upward, shown here by cross-hatching. The outer layer 1 therefore forms an effective light barrier, the light-blocking effect whereof can be further increased if need be by the intermediate layer 2 which is downstream.

Said thermoplastic polymeric additive 5 is preferably polypropylene. It can be mixed with PET in an amount of 1-10 wt-%, if required 5-8 wt-%.

In one of the examples, the intermediate layer 2 containing polypropylene can be completely black, so that any rays that may have traversed the outer layer 1 of the preform are absorbed by the intermediate layer 2, which has a high radiation-absorbing capacity and acts as a downstream radiation filter having a virtually total radiation blocking function, so that virtually no rays can penetrate past the intermediate layer 2, as a result of which the content of the container is no longer attacked by external radiation. This is indicated schematically in Fig. 1 by the arrows ν₁ and ν₂, respectively.

This embodiment is particularly useful when the preform is to be blown into a container and especially into a bottle for UHT milk. In this case, the intermediate layer 2 also acts as a gas barrier, in addition to excluding the light by absorbing it, whereby the oxygen penetrating from the outside is therefore also absorbed by it, in such a way that the milk is not attacked by said outer oxygen particles. This gas barrier effect is therefore combined here with the light barrier action of the outside and inside layers 1 and 3.

The general advantage of a multi-layer structure is that undesirable external substances that may penetrate through the outside layer 1 are finally fully blocked by the intermediate layer 2, acting as an exclusion barrier, which provides extra safety.

To optimize the structure, the intermediate layer 2 can be changed from black to grey with the aid of polypropylene or to other colours that are supported on grey with the aid of polypropylene, in order to ensure the same maximum light exclusion.

The amount of additives 5 in the intermediate layer 2 can be increased to very high levels compared with the usual situation, because the intermediate layer, with e.g. only about 10% of the total thickness, does not affect the mechanical characteristics of the container and so it does not influence either the blow moulds used for the preforms, or the co-injection thereof. These characteristics mainly come from the inside layer 3 and the outside layer 1, which jointly make up about 90% of the three-layer structure 10.

Furthermore, a plurality of other colouring additives and colourants can be incorporated in the intermediate layer 2 more easily than in the customary situations with PET, because one can use lower injection temperatures for the intermediate layer than for the outside layer 1 and the inside layer 3. This opens up a very wide range of possibilities for the incorporation of other and/or more additives, particularly in the intermediate layer, which would not be possible with preforms having a single-layer structure.

With a paler colour for the intermediate layer, a smaller amount of colouring additives is needed in the outside layer, which has a covering function, because a paler colour is easier to hide by a white outside layer. This has a quite favourable effect by reducing the cost and improving the ease of blowing the preform 10. It is therefore possible to use opaque preforms with a thick wall, which would not be possible otherwise under normal conditions.

In addition, the colour of the intermediate layer 2 and the colour of the outside layer 1 can be blended and adjusted to each other if the required colour of the outside surface is not white, such as blue, red, gold, yellow or orange, etc. Such situations can mainly arise from the marketing requirements for the recognizability of said containers, in which PET is a good base material because it offers numerous possibilities in this respect, including a great variety of designs and shapes for the containers. The colour combination mentioned above can be utilized to the utmost by making the outside layer 1 transparent but coloured, thereby providing further options by using any possible colour combination required. This also improves the light barrier properties.

The following examples illustrate the further improvements in the barrier properties of the container wall, not only for light but also for oxygen. An additionally improved oxygen barrier that goes beyond the ordinary PET can be incorporated for the packaging of oxygen-sensitive dairy products that contain basic nutrients such as vitamins, proteins, carbohydrates, starches, essential fatty acids, etc. This can be achieved by incorporating in the intermediate layer 2 materials with improved barrier properties, such as aromatic or aliphatic barrier plastics, nylon and aromatic polyesters such as for example:
- polyethylene 2,6-naphthalate (PEN)
- polyethylene terephthalate ionomer (PETI)
- polyethyleneimine (PEI)
- polytrimethylene naphthalene 2,6-dicarboxylate (PTN) and
- polyethylene terephthalate - polyethylene naphthalate copolymer (PETN).

Alternatively, the same aim can also be achieved by adding an oxygen scavenger, such as an oxidizable polyester or an oxidizable nylon.

This may further best be achieved by incorporating both a material with improved barrier properties and an oxygen scavenger, so that the inside of the container is protected not only from light but also from oxygen.

In this way, the incorporation of polymeric additives in the PET base material in combination with the additional use of colour additives in both multi-layer and single-layer structures can give rise to a great variety of combined colour effects that not only ensure the technically desirable light barrier properties but also offer visual advantages facilitating the identification of the product.

On the other hand, a single-layer structure 40 is satisfactory for some applications in the dairy sector, especially for products derived from milk, where the degrading action of oxygen is less critical. Said single-layer structure is shown in Fig 2. Any colour can be used in these applications, and a single-layer milk bottle can be made by the addition of the required coloured pigments and colouring materials.

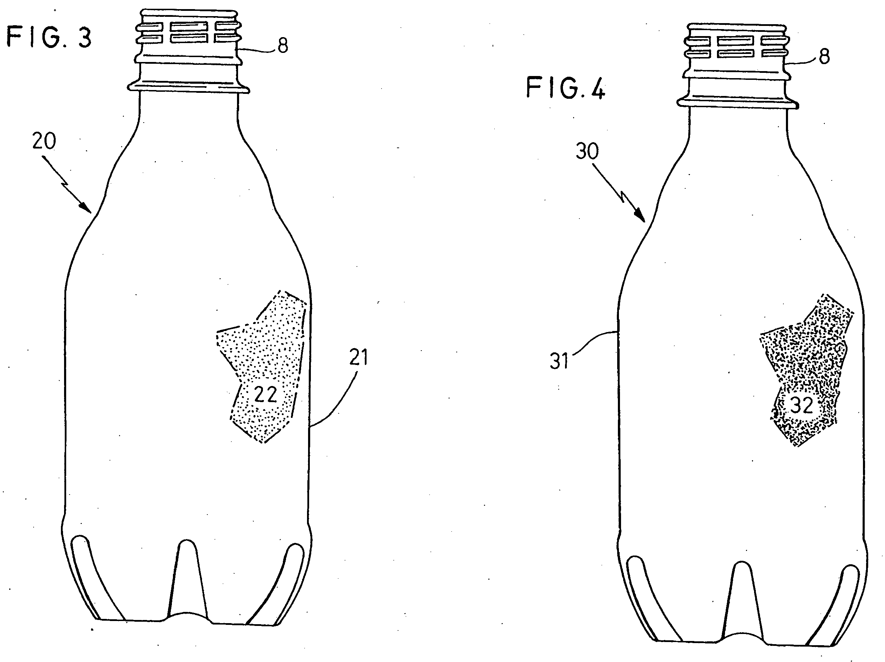

Fig. 3 shows the front view of a container of the bottle type 20 obtained by stretching and blowing a preform 10 or 40 of the type shown in Figs. 1 and 2. The outer wall 21 is visible and has a special appearance 22 indicated here by light stippling. This remarkable effect is caused by a nacreous appearance 22 that the bottle 20 presents to the consumer, making it not only particularly attractive but also easier to recognize. The nacreous effect is promoted by the biaxial stretching of the preform, i.e. its stretching both in the radial and in the longitudinal direction, and by the blowing of the preform to form the container. This nacreous effect is achieved from the delamination occurring in the mutually joined but immiscible primary base materials and polymeric additives, wherein their immiscibility is in turn due to their mutual incompatibility. It is therefore the choice in full awareness of incompatible materials as constituents of the plastic mixture which creates surprising nacreous effects.

This nacreous effect 22 is not only an advantage in the presentation of the product but also serves a technical purpose by making the resulting outer surface 21 quite reflective. The resulting surface therefore already has one of the three fundamental properties characterising a light barrier, which are low transmittivity, high absorptivity and high reflectivity.

What is ingenious here is that this nacreous effect 22 produces a white gloss if a special polymer is chosen and mixed with PET. Satisfactory barrier properties may be obtained even without the addition of any colouring matter, notably a white one. The whitish pale nacreous appearance 22 can therefore be obtained by stretching the plastic without the use of any colouring matter though.

The barrier properties can yet be further promoted by the addition of a small amount of colourants, typically about merely 2-4 wt-%, or about 5-8 wt-%, according to whether the container has a multi-layer structure or a single-layer one. This is a considerable advantage from the technical point of view, since the addition of colourants causes problems when a preform is being blown into a bottle. The more pigment it contains the more difficult is the blowing process. The critical value set above at 8% for coloured pigments is a threshold value beyond which the blowing of preforms into bottles becomes considerably difficult.

It has been shown experimentally that the wall 21 can reflect up to 92% of incident light even without the use of colourants, but by incorporating polymeric additives alone, which is more than sufficient for a wide range of applications, such as sleeve bottles, where the printed sleeve can be drawn with virtually any pattern on such a container. This is therefore a fundamental characteristic which is proper to the present container.

An additional advantage lies in the easier blowing of the preform to a container, owing to the possible absence of coloured pigments, which make blowing only difficult. Furthermore, the mechanical properties of the material are not diminished here as they inevitably are when colourants are added. In addition, the thermal stability of the preform is better, so the latter remains stable at considerably higher temperatures.

In addition, the absence or at least greatly reduced presence of pigments, which are relatively heavier than polymeric additives, means that the container formed is very light, being a reduction up to 20 wt-% lighter, while retaining a reflective index of more than 92, together with the possibility of using the customary blowing equipments.

However, an improvement in the light barrier properties for a multi-layer structure in comparison with a single-layer one cannot be expected if no colourants are incorporated in it. So the use of a multi-layer structure is only sensible if colourants are present. In the absence of colourants, the cheaper single-layer structure will suffice. For structures of this type, such as that shown in Fig. 2, pigments are therefore used in relatively small amounts, yet without exceeding the critical threshold value for blowing.

Further thermoplastic polymeric additives are formed by polyethylene additives, in particular so-called high-density polyethylene known as HDPE, low-density polyethylene (LDPE), medium density polyethylene (MDPE) and linear low density polyethylenes (LLDPE). Further to be considered are polyolefine acetate copolymers, such as methyl (EMA), ethyl (EEA), vinyl (EVA) acetate, polyethylene co-polymers of vinyl alcohol (EVOH),
Polystyrene (PS), polyvinylchloride (PVC), polyethylene-terephthalate (PET), polyethylene-isophthalate (PEI), polybutylene-terephthalate (PBT), polyethylene-naphthalate (PEN), polytrimethylene-naphthalate (PTN), polytrimethylene-isophthalate (PTI), polytrimethylene-terephthalate (PTT), phthalic acid copolymers, polycarbonate (PC), acrylonitrile butadiene styrene (ABS), polyamide 6 (PA6), polyamide 66 (PA 6,6).

Fig. 4 shows a variant of the bottle 30, where the darker shaded zones 31 indicate a metallized appearance 32 of the container.

Said nacreous effect 22, resp. metallized effect 32, which are due to the addition of a polymeric additive to the primary base plastic, have the intrinsic advantage for light-sensitive products, such as UHT milk, that the surface 21 or 31 of the container 20 and 30 containing the milk reflects a substantial proportion of the incident light in a natural way. In addition, the wall of the container has a great deal of internal refraction. These two phenomena mutually combine to reduce or even prevent the penetration of light.

### Examples

In a typical comparison, a one-litre multi-layer bottle with the structure white PET - black PET - white PET weighs 26 grams when made with polymeric additives according to the invention and 32 grams when made by the traditional technique using a large amount of pigment, which means an approximately 25% saving of material, i.e. a considerable amount.

### Experiments

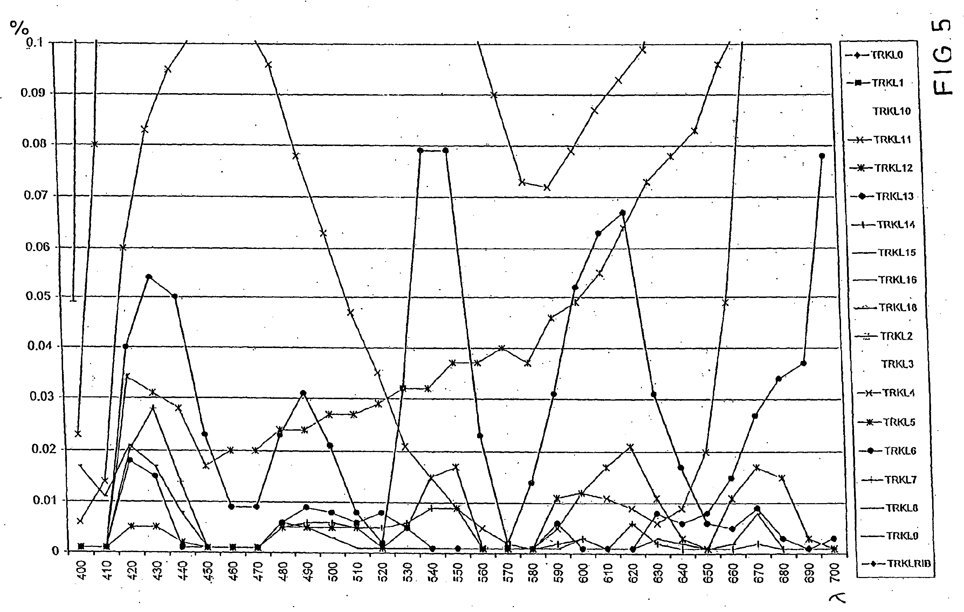

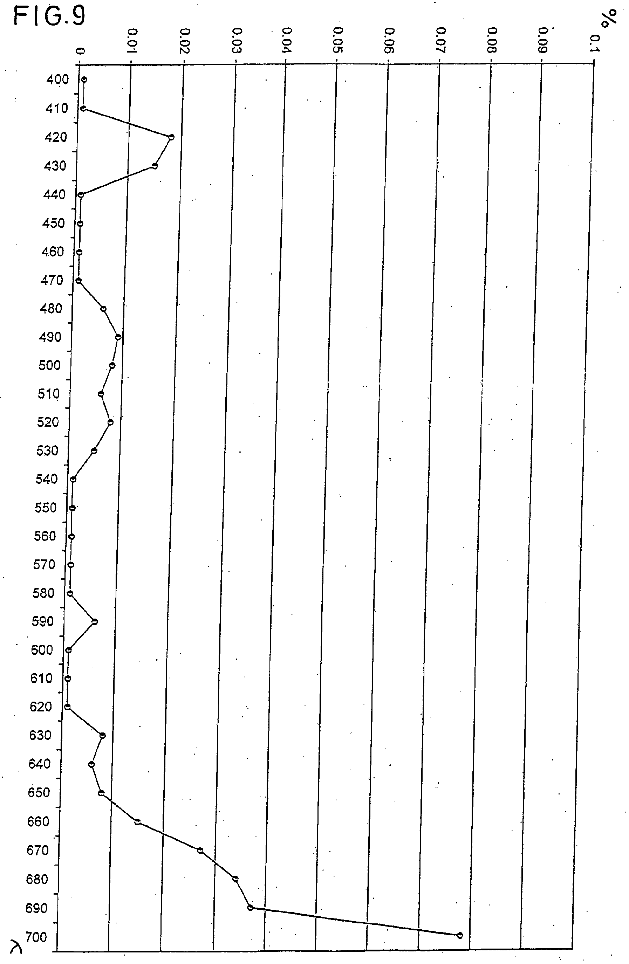

Said light barrier properties and said associated three parameters - transmission, absorption and reflection - were determined experimentally by means of a spectrophotometer of the "datacolour" type 650™ customarily used for this purpose, and the data obtained were used to construct the graphs shown in Figs. 5-9.

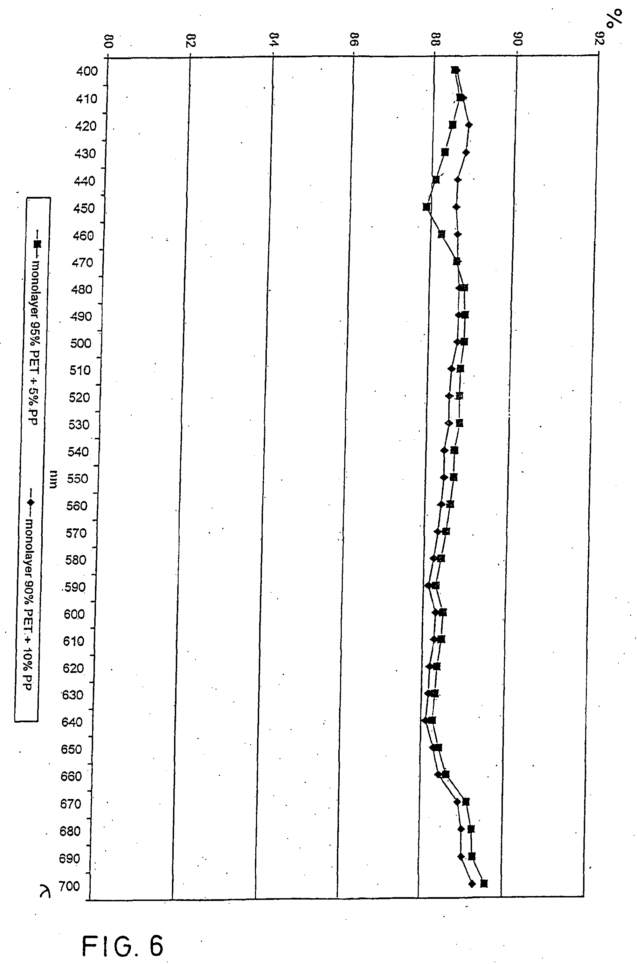

The graphs in Figs. 5 and 6 show the transmission of radiation that is incident on the container as a function of its wavelength λ in the case of a single-layer structure containing 5% of polypropylene in the first case (see Fig. 5) and a structure containing 10% of polypropylene in the second case (see Fig. 6). In the case of light transmission, Fig. 5 shows that an extremely strong light-blocking effect is observed when polypropylene additives are added to PET as the primary plastic without any colour additives or colourants. In Fig. 6, which shows the reflection, the high reflectivity can be observed, which is caused by the nacreous appearance of the wall surface of the container after stretching the original PET/PP preform thereto.

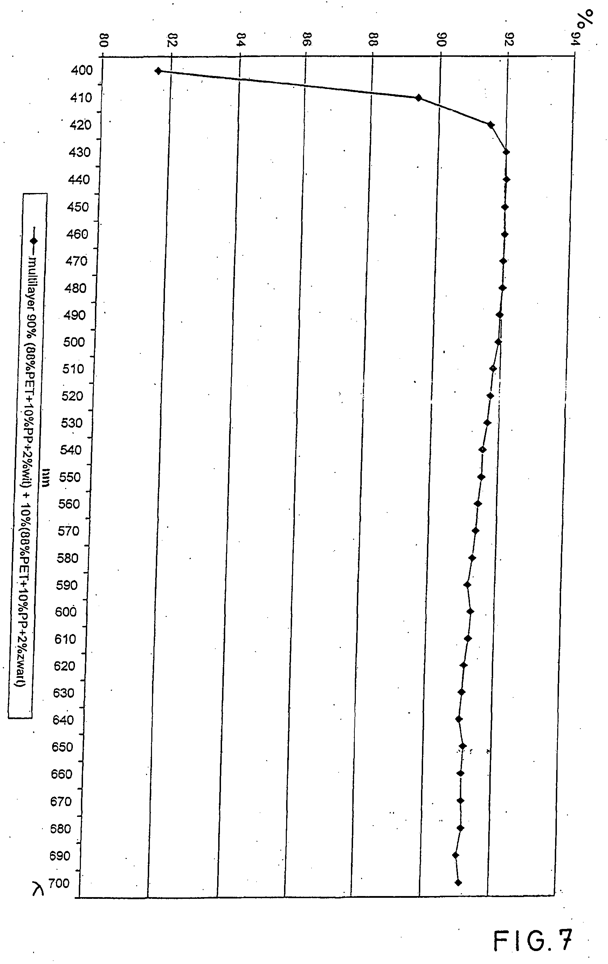

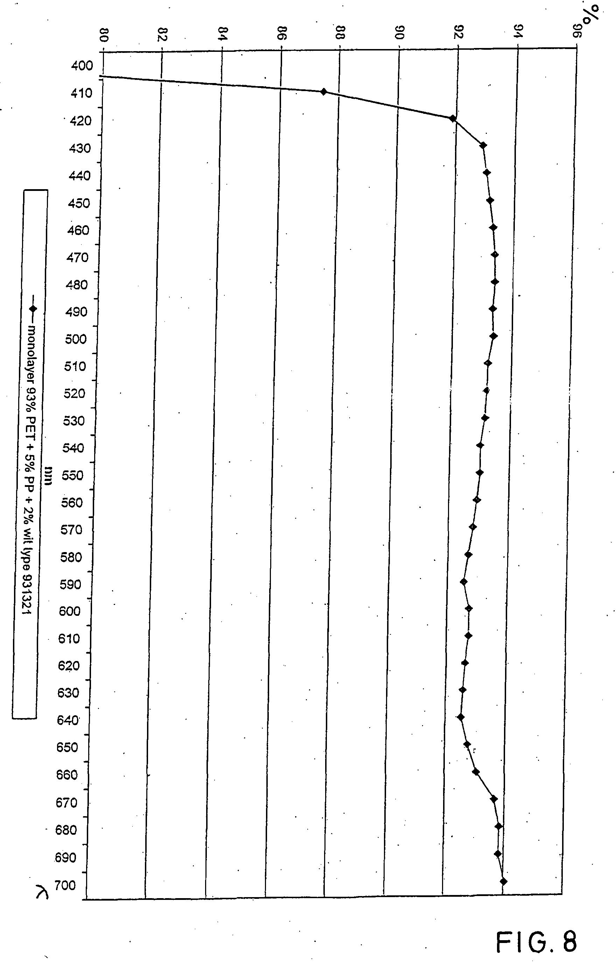

Figs. 7 and 8 similarly show the transmission and reflection of multi-layer structures made with the addition of 10% propylene additives and further with the addition in the amount of 2% of a white colourant in the outside layer 1 and with 2% of a black colourant in the intermediate layer 2. Both Figs. 7 and 8 indicate the great effect on the transmission which is generated by the incorporation of a black layer as intermediate layer, ensuring the total exclusion of light. As to the reflectance shown in Fig. 8, the reflecting effect of the nacreous outer surface of the wall can be observed, just as indicated in the case of the one-layer structure represented in Figs. 5 and 6, and partly by the internal refraction of light.

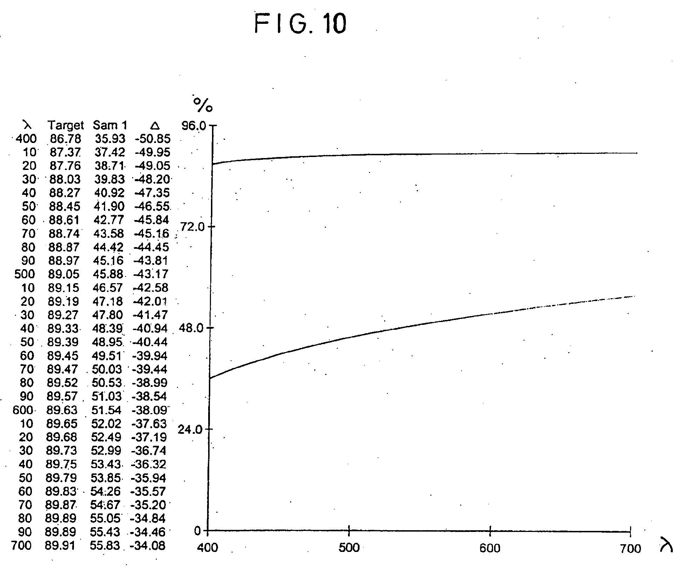

Measurements carried out on single-layer bottles indicated that the transmitted light is reduced to only 5%, which is an excellent result compared with PET, which is not completed with polypropylene additive and without white colourants, as set out hereafter, especially in connection with Figs. 10-11.

If the container is only made of the primary plastic PET, one could observe that up to about 90% of the light is transmitted.

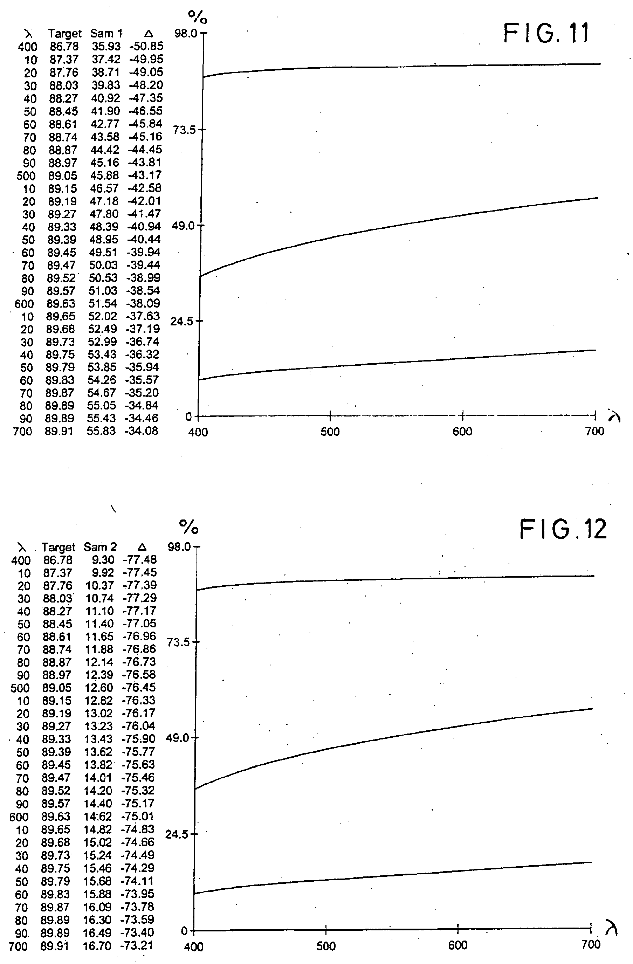

Fig. 11 refers to the case when 2% of additives in the form of polypropylene is added to the primary base material. It can be concluded from this graph that even such a modest amount of polypropylene additives causes a significant reduction in the amount of light allowed through.

It can be observed on Fig. 12 showing the addition of polypropylene up to 5% that the light rays transmitted through the container wall are further limited to 15%.

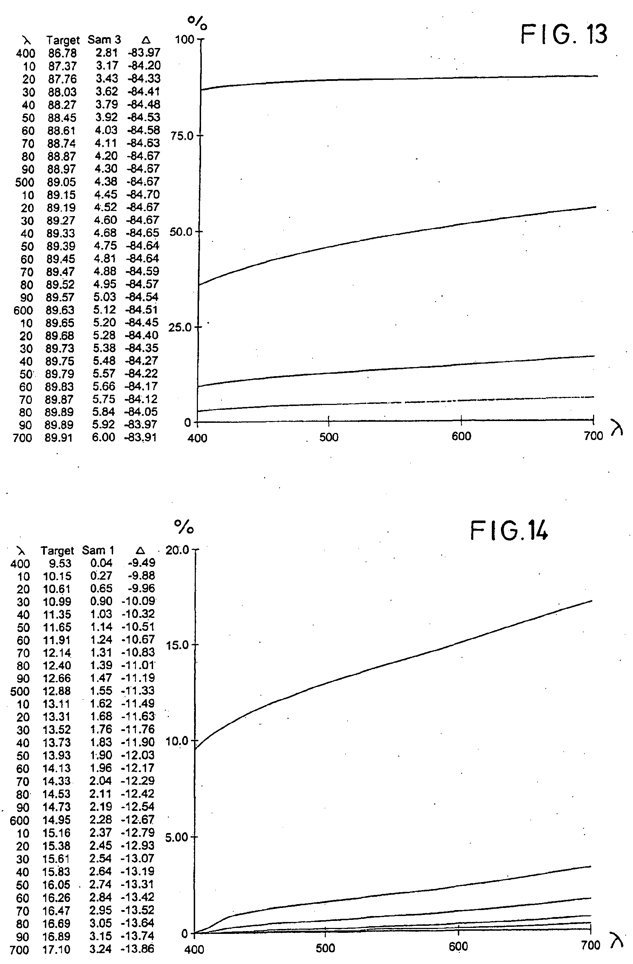

It can be deduced from Fig. 13 that a light transmission is limited to merely 5% when adding the same additional amount of polypropylene additives of 5% yielding a total amount of 10% PP. It is thus striking that the light exclusion is not linear with the addition of polypropylene additives, but instead decreases relatively faster. For example, one may state when comparing Fig. 11 and 13 that five times more additives correspond to ten times less light transmission. A conclusion here is then that the adding of polypropylene additives up to 10% makes the light transmission decrease by 95%, which is thus a quite remarkable result.

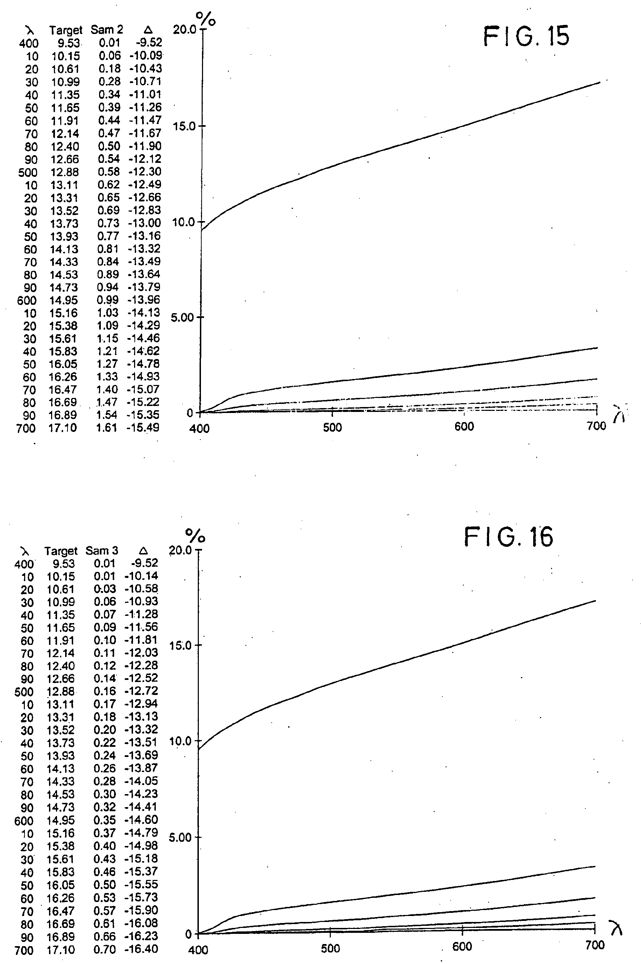

A further group tests shown in Fig. 14 to 17 is set out hereafter. In this group 5% polypropylene additives are respectively added to the primary base material PET, with a further addition of white colourants in an amount comprised between 2% and 8% respectively, with each time an increase of 2%, i.e 4 and resp. 6% white. The graphs in Fig. 14 show that the addition of 2% colourants reduces the transmission of light rays to approximately 2%, while in the addition of colourants is doubled to 4 %, the transmission of light is reduced by half to approximately 1% as appears from Fig. 15.

Multiplying colourants by three times up to 6% causes a further reduction of light to merely approximately 0,3 % as shown in Fig. 16.

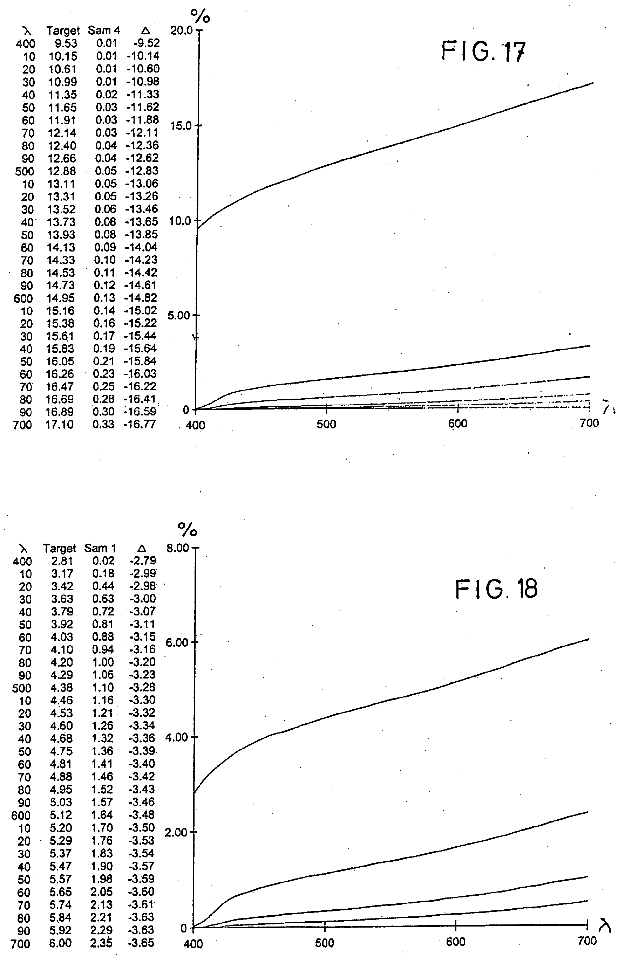

Fig. 17 shows the maximum addition of white according to the present tests in the amount of 8% with a light transmission reduced to approximately merely 0,15% of the incident light.

It can therefore be deduced from the four preceding test series that the further addition of white colourants by 2% reduces the light transmission from 15 % as shown in Fig. 12 to merely 2% as shown in Fig. 14. With regard to this, a moderate addition of white colourants is able to reduce the light transmission to a very low level of only 0,15% light transmission.

Similarly as in the preceding tests series which are represented in Fig. 10 to 13, it can be stated again that the reduction of light transmission is not linear in function of the addition of colourants since multiplying the colourants by four from 2 to 8% generates up to approximately 13 times more light transmission, which can be considered as a remarkable result as well.

A still further series of four tests represented in Fig. 18 to 21 is set out hereafter. These tests take place in quite similar conditions, under doubling however of the added percentage of polypropylene additives from 5 to 10%.

Fig. 18 shows a graph of transmittance in % in function of the wavelength of the incident radiation, wherein it maybe observed that adding 2% of colourants with a doubled addition of polypropylene additives to 10%, transmits only approximately 1% of the incident light radiation, i.e. the half of the transmittance under similar conditions, with the addition of the half of polypropylene additives to 5% however, as shown in Fig. 14.

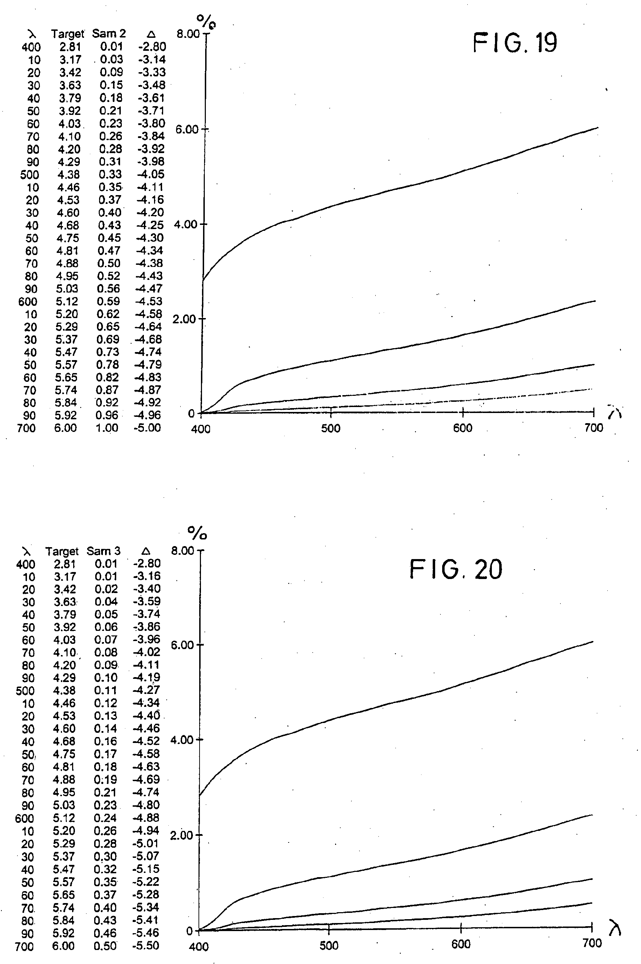

The subsequent Fig. 19 to 21 are similar representations with each time 2 additional percents of colourants addition. With the first doubling of the colourants to 4% represented in Fig. 19, there is still only 0,4% light transmission. When tripling the colourant addition white to 6%, the graph represented in Fig. 20 shows that the light transmission is still further reduced by half to 0,2% of the incident light radiation.

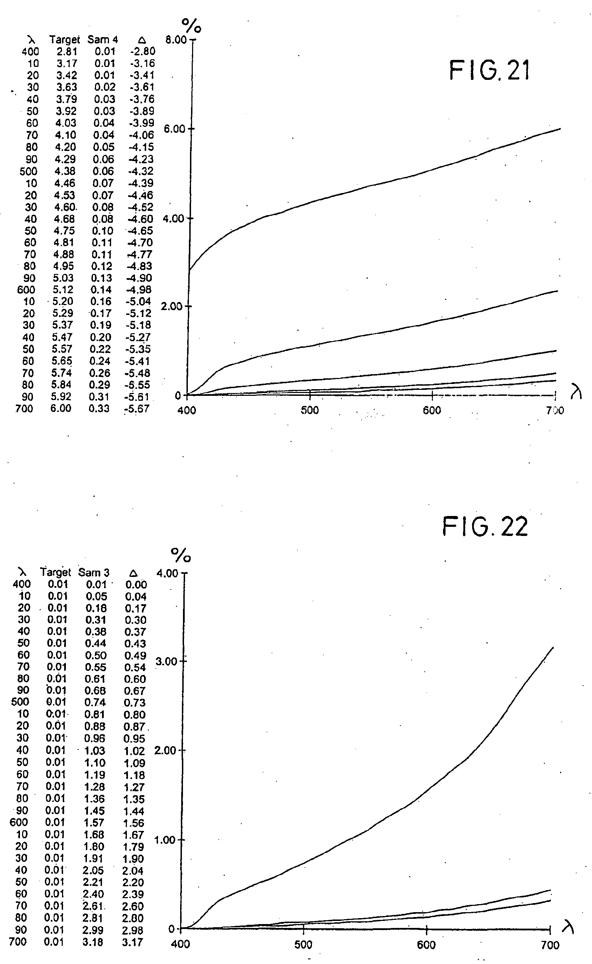

Finally when multiplying by four the white colourant addition to 8%, the light transmission is reduced to only 0,1% of the incident radiation as shown in Fig. 21.

A comparison of the test results within this additional group of measures represented by Fig. 18 to 21 teaches again that the reduction of light transmission is not linear with the increase of colourants, but with a certain acceleration effect with amplifying reduction of the light transmission with respect to the addition of colourant additives.

Consequently, it can be deduced from the latter series of measurements that the graphs appear two times lower compared to the previous series measurements with the half of polymer additives, i.e. 5% PP, including in the presence of white colourant, when further adding polypropylene as polymer additive up to 10%.

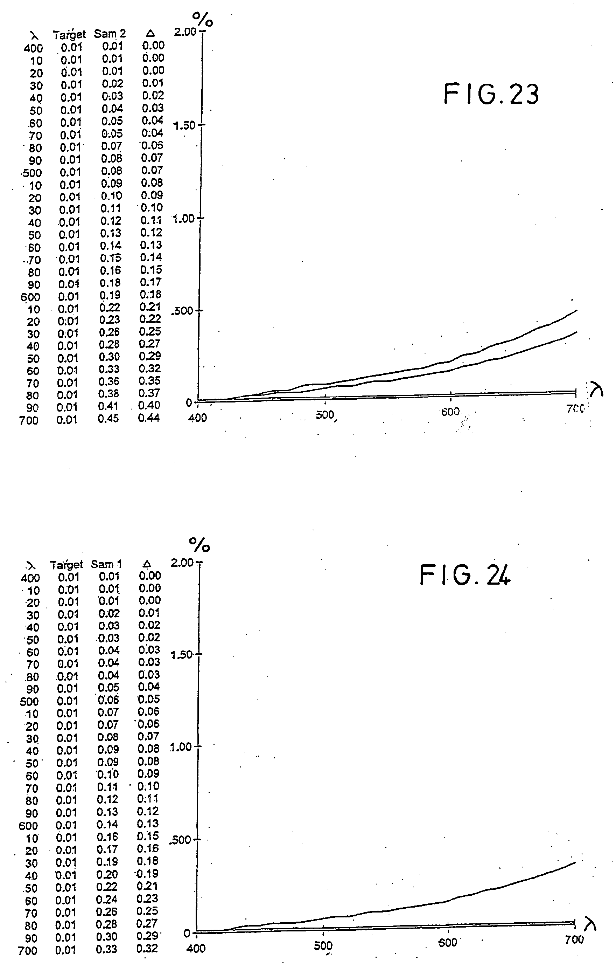

At last, a last series of measurements is represented in Fig. 22 to 24 showing analogue graphs, each time with colourant additives in the amount of 8%, the first one whereof in Fig. 22 in the absence of polymer additives, which means only with colourant additives, whereas the two subsequent figures represent graphs each time with the addition of 5% polymer additives, i.e. 5% polypropylene in Fig. 23, resp. 10% polypropylene in Fig. 24.

Fig. 22 lets light radiation through up to approximately 1%, whereas the addition of merely 5% polypropylene transmits light radiation up to merely 0,15% of the incident light radiation. When doubling polypropylene to 10%, the light transmission is limited to approximately 0,1% as shown in Fig. 24.

Both latter Fig. 23 and 24 correspond logically with Fig. 17 and respectively 21 above. It can be deduced from these figures that the addition of white colourants without polymer additives may cause up to 1% light transmission at a wave length of 550 nm, but not less. Only the addition of polymer additive polypropylene may bring back the graphs to a level up to 0,1%, which is extremely low. Lower levels of colourant additions white with polymer additives reproduce the same performances as observed in Fig. 10 to 21.

It is to be noted here that these measurements were carried out by means of a spectrophotometer which is a worldwide recognised device which provides extremely reliable measurement results, so that the tests set out above should be considered as particularly relevant. All abovementioned tests were carried out with each time the same bottle.

Besides, only the transmitted light radiation getting through the container wall was measured, since only this amount of radiation is detrimental for the product which is to be contained in the container. The results set out above should further be related with respect to admissible radiation transmission values in the intended field. In view thereof, it should be considered that when the product to be contained is milk, the maximum admissible transmission value amounts to 0,3%. In other words, this means that for milk preforms the addition of colourants is suitable in the amount of 6% in case 5% polymer additives are added as represented in Fig. 13. In case for instance 10% polymer additives are added, the amount of white colourants may be reduced to a percentage which is comprised between 4 and 6, e.g. approximately 5% of white colourants, as may be assumed by extrapolating the measurement results of Fig. 19, resp. 20. This is a remarkable result in the meaning that blowing a preform becomes more difficult as more colourant additives are added. The difficulty of blowing becomes critical, especially as from 4% addition of white colourants and more. It is to be noted here that the performance of the blowing machine may decrease up to 20% and more. In addition, one is also limited in the geometry of the preform because the wall thickness thereof will be smaller than 4 mm, and even up to 3,5 mm.

When further also considering the costs of white colourants such as titanium dioxide or zinc oxide, the usefulness of a minimum addition of white colourants will be appreciated directly. In this respect, it may be stated that very favourable transmission results may be achieved without the addition of colourants. Example of applications in this respect are a maximum value of 0,7% transmission, which is not enough for the filtering of light for some kinds, in particular UHT milk where 0,3 is the maximum transmission.

When adding an amount reduced by half of white colourant additives of the UHT type for the same amount of added polymer additives of polypropylene, i.e. 5%, a light transmission of 2% is achieved.

It can further be observed that the colourants will have a more efficient behaviour regarding light exclusion in the presence of polymer additives of polypropylene. It can therefore be stated that the polymer additives have a synergetic effect on colourant additives.

It can further be observed on most of the graphs that they present an increasing profile in function of the wavelength, whereby it may be stated that the smaller the wavelength of the incident radiation, the easier the incident radiation may be blocked by the container wall.

It is particularly worth noting that the multi-layer structure of the container according to the invention can also be used with an intermediate layer 2 that is similarly white instead of being black. The replacement of the latter by the former according to the invention is possible here thanks to said synergistic effect of the polypropylene-type polymeric additives and colouring additives, ensuring an additional intrinsic light-blocking effect for enabling the achievement of this blocking mode of the intermediate layer 2 without the need of a black intermediate layer with its characteristic light-absorbing function. This also has the outstanding advantage that owing to the invention, the black intermediate layer no longer needs to be covered by a white outer layer as in the conventional types of preform. Achieving this quite remarkable effect is only possible by subjecting the initial preform, i.e. the semi-finished product to biaxial stretching in order to obtain the container as the finished product. It is therefore possible to achieve the absorption of the radiation without any pigmentation, i.e. without the addition of colouring additives that are needed for obtaining an absorbing black intermediate layer, but not for a white light-blocking intermediate layer. A similar effect may be obtained without adding colouring additives or pigments, yet by subjecting the initial preform to biaxial stretching in order to form the container. Owing to this method of biaxial stretching, a crystalline structure is achieved in the polyethylene terephthalate, as a result of which the biaxially stretched container becomes white.

It is therefore possible now to produce a coloured container like a bottle with three layers or more generally a multi-layer structure, by adding a relatively small percentage of colourants or pigments with a suitable incorporation of polymeric additives according to the invention.

It should further be mentioned that it is rather difficult to load PET. Indeed, incorporating additives like pigments and colourants in PET is relatively difficult because the processing temperature used here is high, i.e. from 250 to 300°C, which is undesirable for pigments and colourants. In addition, the pigmentation of PET is much more expensive than that of other plastics. In this respect, there are pigments allowing higher levels of charges, such as e.g. HCA^{®} used in the tests mentioned above. The same light exclusion effect can therefore be obtained here but at a lower cost. However, a multi-layer structure must be used to reduce the transmission to an absolute minimum, i.e. practically to zero.

Owing to the invention, light radiation is absorbed instead of being refracted, and this is achieved merely by using polymeric additives, i.e. with very small pigment or colourant charges or even none at all.

To summarise, multi-layer bottles can be advantageously made with a lower weight and so a lower cost. Another advantage is that the injection moulding and blowing process used here is equivalent as with customary single-layer PET structures, which is not possible with conventional systems. Yet another advantage of the present invention is that the surface of the containers has a nacreous appearance. This is a particularly remarkable effect, which consumers find very attractive.

Furthermore, none of the existing structures mentioned above can ensure an additional oxygen barrier effect over and above that obtained with conventional PET containers, at least for the packing of products that are sensitive to both light and oxygen. In regard thereof, a still further advantage of the invention is that an oxygen barrier can be incorporated in the walls of the container or preform by replacing polyethylene terephthalate in one or more of the layers by a polyester barrier that absorbs oxygen.

## Claims

1. Preform for a container intended for containing products therein that are sensitive to radiation, consisting of at least one base layer (1) made of a primary plastic base material, with a certain amount of additives (5) incorporated in it (1), wherein said preform (10, 20) is opaque over virtually the whole extent thereof, wherein a relatively low percentage of plastic additives (5) is incorporated to generate said opaque appearance (22), so as to protect the inner space (9) thereof which is delimitated by it against external radiation (ν₁, ν₂) under normal pressure conditions, wherein said primary plastic material is transparent, wherein said primary plastic material is polyethylene terephthalate, wherein it is composed of a mixture of PET base material with thermoplastic polymeric additives in a ratio of 1 to 20% additives, **characterised in that** said ratio is 1-10 wt-%, **in that** the additives are made of polypropylene or polyethylene, **in that** the preform has a multilayer structure composed of a base layer (1), which is composed of a primary plastic material and wherein a light barrier layer (2) is incorporated, which is composed of a secondary plastic material, through which virtually all the transmitted light is blocked, and **in that** it has a certain amount of fragmented metal in said mixture, the metal being in powder in said mixture and the said amount being up to approximately 2%.

2. Preform according to claim 1, **characterised in that** the density of additives is lower than the one of said primary base material.

3. Preform according to claim 1 or 2, **characterised in that** it comprises of a mixture of said additives with polyethylene terephthalate in an amount of 3 to 9 wt-%.

4. Preform according to one of the claims 1 to 3, **characterised in that** the preform has a coloured intermediate layer (2), or **in that** said multilayer structure has a black PET intermediate layer, or **in that** said multilayer structure has a white PET intermediate layer.

5. Preform according to one of the claims 1 to 4, **characterised in that** a gas barrier is incorporated in the preform wall by replacing the PET in the intermediate layer (2) by a barrier material with an associated gas absorption.

6. Method for manufacturing a container intended for containing products therein by injection moulding a preform according to one of the preceding claims, followed by blowing it to a container, whereby the preform is made by adding a low percentage of polymeric additives to a primary plastic material, for providing an opaque appearance to the preform, wherein said opaque preform is then blow moulded to an opaque container, for protecting the content thereof against external radiation, so that the refraction index of said primary material is influenced in such a way that said radiation is substantially not refracted, and the preform is made by adding a low percentage of polymeric additives to a primary plastic material, for providing an opaque appearance to the preform with a pale appearance, which is blow moulded to said opaque container with a likewise pale appearance.

7. Method according to the preceding claim, whereby the said opaque preform is transformed to a container by blowing it in such a way that the container wall has a nacreous appearance, wherein said nacreous effect is achieved by incorporating said polymeric additives with stretching the preform, wherein the wall surface naturally reflects a substantial part of the incident light and wherein said surface has a high level of internal refraction.

8. Method according to one of the claims 6 or 7, whereby the thermoplastic polymeric additives are mixed with PET in a ratio of 1 to 10 wt-%, and/or wherein a polypropylene PP additive is added for being mixed up with the PET, wherein said PP-material is used for subsequently stretching the preform.

9. Method according to one of the claims 7 or 8, whereby a small amount of colourants is added to the PET/PP mixture, up to a level of approximately 8 wt-%, preferably 5%, by means whereof transmittance is optimized, particularly wherein a small amount of colourants is added to further reinforce the barrier properties.

10. Method according to one of the claims 7 to 9, whereby the suitable additives are incorporated before the blowing of the preform into a container whereby the surface of the PET container is transformed by changing the nacreous appearance to a metallized one with a silvery metallic appearance, wherein said nacreous and metallized finishes are coloured by changing the white base by adding a blend of pigments and PP to it, and/or wherein the nacreous and/or the metallized finishes are coloured by using a multi-layer structure with a coloured intermediate layer.

11. Method for producing opaque multilayer polyester containers, according to one of the claims 8 to 10, whereby the injection moulding of a multilayer preform with co-injection followed by the blowing thereof to a container.

12. Container produced from a preform according to one of the claims 1 to 5, **characterised in that** it is a customary container intended for normal pressure operating conditions.

## Patentansprüche

1. Vorformling für einen Behälter, der zum Aufnehmen von Produkten gedacht ist, die gegenüber Strahlung empfindlich sind, bestehend aus wenigstens einer Basisschicht (1) aus einem primären Basis-Kunststoffmaterial mit einer bestimmten Menge von Additiven (5), die in dieser (1) eingefügt sind, wobei der Vorformling (10, 20) über virtuell dessen gesamtes Maß opak ist, wobei ein relativ niedriger Prozentanteil der Kunststoffadditive (5) eingefügt ist, um die opake Erscheinung (22) zu erzeugen, um so dessen Innenraum (9) zu schützen, welcher durch diese gegenüber einer externen Strahlung (y₁,y₂) unter normalen Druckbedingungen abgegrenzt ist, wobei das primäre Kunststoffmaterial transparent ist, wobei das primäre Kunststoffmaterial ein Polyethylenterephthalat ist, wobei dieses zusammengesetzt ist aus einem Gemisch aus PET-Basismaterial mit thermoplastischen Polymer-Additiven in einem Verhältnis von 1 zu 20% Additive, **dadurch gekennzeichnet, dass** das Verhältnis 1 zu 10 GEW.% beträgt, dadurch, dass die Additive aus Polypropylen oder Polyethylen hergestellt sind, dadurch, dass der Vorformling eine Mehrschichtstruktur hat, zusammengesetzt aus einer Basisschicht (1), welche aus einem primären Kunststoffmaterial zusammengesetzt ist, und wobei eine Licht-Barrierenschicht (2) eingebaut ist, welche aus einem sekundären Kunststoffmaterial zusammengesetzt ist, durch welches virtuell das gesamte übermittelte Licht blockiert wird, und dadurch, dass diese eine bestimmte Menge fragmentierten Metalls in dem Gemisch hat, wobei das Metall in dem Gemisch in Pulverform vorliegt und der Betrag bis zu etwa 2% beträgt.

2. Vorformling nach Anspruch 1, **dadurch gekennzeichnet, dass** die Dichte der Additive geringer ist als diejenige des primären Basismaterials.

3. Vorformling nach Anspruch 1 oder 2, **dadurch gekennzeichnet, dass** dieser ein Gemisch von Additiven mit Polyethylenterephthalat in einer Menge von 3 bis 9 GEW% aufweist.

4. Vorformling nach einem der Ansprüche 1 bis 3, **dadurch gekennzeichnet, dass** der Vorformling eine gefärbte Zwischenschicht (2) hat, oder dadurch, dass die Mehrschichtstruktur eine schwarze PET-Zwischenschicht hat, oder dadurch, dass die Mehrschichtstruktur eine weiße PET-Zwischenschicht hat.

5. Vorformling nach einem der Ansprüche 1 bis 4, **dadurch gekennzeichnet, dass** eine Gasbarriere in die Vorformlingwand eingebaut ist, indem das PET in der Zwischenschicht (2) durch ein Barrierenmaterial mit einer zugehörigen Gasabsorption ersetzt wird.

6. Verfahren zum Herstellen eines Behälters, der zum Aufnehmen von Produkten gedacht ist, durch Spritzgießen eines Vorformlings gemäß einem der vorhergehenden Ansprüche, gefolgt durch ein Aufblasen desselben zu einem Behälter, wobei der Vorformling hergestellt wird durch Hinzufügen eines geringen Prozentanteils von polymeren Additiven zu einem primären Kunststoffmaterial, um eine opake Erscheinungsform des Vorformlings bereitzustellen, wobei der opake Vorformling dann durch Blasen zu einem opaken Behälter geformt wird, um den Inhalt desselben gegenüber einer externen Strahlung zu schützen, so dass der Refraktionsindex des primären Materials in der Weise beeinflusst wird, dass die Strahlung im Wesentlichen nicht gebrochen wird, und der Vorformling hergestellt wird, indem ein geringer Pozentanteil polymerer Additive zu einem primären Kunststoffmaterial hinzugefügt wird, um den Vorformling in einer opaken Erscheinungsform mit blasser Erscheinung bereitzustellen, welcher durch Blasen in dem opaken Behälter mit einer ebenso blassen Erscheinung durch Blasen geformt wird.

7. Verfahren nach dem vorhergehenden Anspruch, wobei der opake Vorformling in einen Behälter umgeformt wird, indem dieser in der Weise aufgeblasen wird, dass die Behälterwand eine perlmutartige Erscheinung hat, wobei der Perlmuteffekt durch Einbauen der polymeren Additive beim Strecken des Vorformlings erreicht wird, wobei die Wandoberfläche in natürlicher Weise einen wesentlichen Teil des einfallenden Lichts reflektiert und wobei die Oberfläche einen hohen Grad an innerer Refraktion hat.

8. Verfahren nach einem der Ansprüche 6 oder 7, in welchem die thermoplastischen polymeren Additive mit PET in einem Verhältnis von 1 zu 10 GEW% gemischt werden und/oder in welchem ein Polypropylen-PP-Additive hinzugefügt wird, um mit dem PET gemischt zu werden, wobei das PP-Material zum nachfolgenden Strecken des Vorformlings verwendet wird.

9. Verfahren nach einem der Ansprüche 7 oder 8, in welchem eine kleine Menge von Farbstoffen dem PET-PP-Gemisch hinzugefügt wird, bis zu einem Anteil von etwa 8 GEW%, vorzugsweise 5 GEW%, wodurch der Transmissionsgrad optimiert wird, wobei insbesondere eine kleine Menge Farbstoffe hinzugefügt wird, um die Barriereneigenschaften weiter zu verstärken.

10. Verfahren nach einem der Ansprüche 7 bis 9, in welchem die geeigneten Additive vor dem Blasen des Vorformlings in einen Behälter eingebaut werden, wobei die Oberfläche des PET-Behälters umgeformt wird, indem die perlmutartige Erscheinung in eine metallische mit einem silbrig metallischen Erscheinungsbild geändert wird, wobei die Perlmut- oder Metallausführung gefärbt werden, indem die weiße Basis durch Hinzugabe eines Gemisches aus Pigmenten und PP verändert wird und/oder wobei die Perlmut- und/oder die Metallausführung gefärbt werden, indem eine Mehrschichtstruktur mit einer gefärbten Zwischenschicht verwendet wird.

11. Verfahren zum Herstellen von opaken Mehrschicht-Polyesterbehältern nach einen der Ansprüche 8 bis 10, in welchem dem Spritzgießen eines Mehrschicht-Vorformlings mit Co-Injektion ein Blasen desselben in einen Behälter folgt.

12. Behälter, hergestellt aus einem Vorformling nach einem der Ansprüche 1 bis 5, **dadurch gekennzeichnet, dass** dieser ein üblicher Behälter ist, der für Betriebsbedingungen unter normalem Druck gedacht ist.

## Revendications

1. Préforme pour un récipient destiné à contenir des produits qui sont sensibles aux radiations, constituée d'au moins une couche de base (1) en une matière primaire de base en plastique, une certaine quantité d'additifs (5) y (1) étant incorporée, ladite préforme (10, 20) étant opaque sur pratiquement toute son étendue, dans laquelle un pourcentage relativement faible d'additifs de plastiques (5) est incorporé pour produire l'aspect opaque (22), de manière à protéger son espace intérieur (9), qui est délimité par celle-ci, contre le rayonnement externe (ν₁,ν₂) dans des conditions normales de pression, ladite matière plastique primaire étant transparente, ladite matière plastique primaire étant du téréphtalate de polyéthylène, celle-ci étant composée d'un mélange de matériau de base en PET avec des additifs polymères thermoplastiques dans une proportion de 1 à 20% d'additifs, **caractérisée en ce que** ledit rapport est de 1 à 10 % en poids, **en ce que** les additifs sont fabriqués en polypropylène ou en polyéthylène, **en ce que** la préforme a une structure multicouche composée d'une couche de base (1), qui se compose d'une matière plastique primaire et dans laquelle une couche formant barrière à la lumière (2) est incorporée, qui est composée d'une matière plastique secondaire, par laquelle pratiquement toute la lumière transmise est bloquée, et **en ce qu'**il y a une certaine quantité de métal fragmenté dans ledit mélange, le métal étant sous forme de poudre dans ledit mélange et ladite quantité pouvant atteindre environ 2%.

2. Préforme selon la revendication 1, **caractérisée en ce que** la densité d'additifs est inférieure à celle dudit matériau de base primaire.

3. Préforme selon la revendication 1 ou 2, **caractérisée en ce qu'**elle comprend un mélange desdits additifs avec du téréphtalate de polyéthylène selon une quantité de 3 à 9% en poids.

4. Préforme selon l'une des revendications 1 à 3, **caractérisée en ce que** la préforme présente une couche intermédiaire colorée (2), ou **en ce que** ladite structure multicouche comprend une couche intermédiaire en PET noire, ou **en ce que** ladite structure multicouche a une couche intermédiaire en PET blanche.

5. Préforme selon l'une des revendications 1 à 4, **caractérisée en ce qu'**une barrière à gaz est incorporée dans la paroi de la préforme en remplaçant le PET dans la couche intermédiaire (2) par un matériau formant barrière avec une absorption de gaz associée.

6. Procédé de fabrication d'un récipient destiné à contenir des produits dans celui-ci par moulage par injection d'une préforme selon l'une quelconque des revendications précédentes, suivie par le soufflage de celle-ci en un récipient, dans lequel la préforme est réalisée par l'addition d'un faible pourcentage d'additifs polymères à une matière plastique primaire, pour fournir un aspect opaque à la préforme, dans lequel ladite préforme opaque est ensuite moulée par soufflage en un récipient opaque pour protéger le contenu de celui-ci contre le rayonnement externe, de sorte que l'indice de réfraction de ladite matière primaire est influencée d'une manière telle que ledit rayonnement est pratiquement non réfracté et la préforme est réalisée en ajoutant un faible pourcentage d'additifs polymères à une matière plastique primaire, pour fournir une apparence opaque à la préforme avec un aspect pâle, qui est moulée par soufflage audit récipient opaque avec un aspect aussi pâle.

7. Procédé selon la revendication précédente, dans lequel ladite préforme opaque est transformée en un récipient par soufflage de celle-ci d'une façon telle que la paroi du récipient a une apparence nacrée, dans lequel cet effet nacré est obtenu en incorporant lesdits additifs polymères tout en étirant la préforme, dans lequel la surface de paroi réfléchit naturellement une partie substantielle de la lumière incidente et dans lequel ladite surface a un niveau élevé de réfraction interne.

8. Procédé selon l'une des revendications 6 ou 7, dans lequel les additifs polymères thermoplastiques sont mélangés avec du PET selon un rapport de 1 à 10% en poids, et/ou dans lequel un additif de polypropylène PP est ajouté pour être mélangé à du PET, dans lequel ledit matériau PP est utilisé pour étirer ensuite la préforme.

9. Procédé selon l'une des revendications 7 ou 8, dans lequel une petite quantité de colorants est ajoutée au mélange de PET/PP, jusqu'à un niveau d'environ 8% en poids, de préférence de 5%, au moyen de quoi la transmittance est optimisée, en particulier dans lequel une faible quantité de colorants est ajoutée pour renforcer davantage les propriétés de barrière.

10. Procédé selon l'une des revendications 7 à 9, dans lequel les additifs appropriés sont incorporés avant le soufflage de la préforme en un récipient, dans lequel la surface du récipient en PET est transformée en changeant l'apparence nacrée en une métallisées avec un aspect métallique argenté, dans lequel lesdites finitions métallisées et nacrées sont colorées en changeant le blanc de base par l'ajout à celle-ci d'un mélange de pigments et de PP, et/ou dans lequel les finitions nacrées et/ou métallisées sont colorées en utilisant une structure multicouche avec une couche intermédiaire colorée.

11. Procédé de fabrication de récipients en polyester multicouches opaques selon l'une quelconque des revendications 8 à 10, dans lequel le moulage par injection d'une préforme multicouche avec co-injection, est suivi de l'expansion de celle-ci en un récipient.

12. Récipient réalisé à partir d'une préforme selon l'une quelconque des revendications 1 à 5, **caractérisé en ce qu'**il consiste en un récipient courant destiné à des conditions de fonctionnement normales de pression.
